Europäisches Patentamt

European Patent Office

Office européen des brevets

(11) Publication number: **0 248 503**
**A1**

# EUROPEAN PATENT APPLICATION

(21) Application number: **87201067.3**

(22) Date of filing: **05.06.87**

(51) Int. Cl.⁴: **F02M 31/12**

(30) Priority: **05.06.86 NL 8601460**

(43) Date of publication of application:
**09.12.87 Bulletin 87/50**

(84) Designated Contracting States:
**AT BE CH DE ES FR GB GR IT LI LU NL SE**

(71) Applicant: **Texas Instruments Holland B.V.**
**Kolthofsingel 8 Postbox 43**
**NL-7600 AA Almelo(NL)**

(72) Inventor: **Van der Ploeg, Arie**
**Larixlaan 12**
**NL-7642 VA Wierden(NL)**
Inventor: **Van Wechem, Guus**
**Kattenhaarsweg 78**
**NL-7462 ES Rijssen(NL)**

(74) Representative: **van der Beek, George Frans**
**et al**
**Nederlandsch Octrooibureau Johan de**
**Wittlaan 15 P.O. Box 29720**
**NL-2502 LS 's-Gravenhage(NL)**

(54) Inlet manifold of a combustion engine and heating device for said manifold.

(57) An inlet manifold for a combustion engine is provided with a heating device for the heating of fuel mixture. This heating device (2) comprises a heat sink (3) on which are fixed a number of thermistor tablets (8) of material with a positive temperature coefficient. There is also a contact carrier (4) of plastic material with one or more contact springs (9) which each engage with a tablet (8). The contact springs are connected to the connecting element (10) for an electricity supply cable (11). The heating device is fixed by fixing means (12, 13, 14) in an opening of the inlet manifold. In order to keep heat losses through the inlet manifold to a minimum, the heat sink (3) is fixed in insulated fashion on or in the contact carrier (4), while the said fixing means (12, 13, 14) engage with the contact carrier (4), and not with the heat sink (3).

fig-2

## Inlet manifold of a combustion engine and heating device for said manifold.

The invention relates in the first instance to an inlet manifold for a combustion engine, provided with a heating device for the heating of fuel mixture, said heating device having a metal disc (heat sink) on which are fixed one or more thermistor tablets of material with a positive temperature coefficient (PTC), a contact carrier of plastic material with one or more contact springs which each engage with a PTC tablet and are connected to a connecting element for an electricity cable, with means being present for fixing the device in an opening of the inlet manifold.

The function of the inlet manifold is to contribute to the evaporation of the fuel and to distribute the fuel mixture as evenly as possible over the cylinders. The evenness of the distribution depends partly on the extent to which the fuel evaporates. The evaporation often leaves much to be desired, in particular when the engine is cold. That is why provision is made on the bottom side of the inlet manifold for a heating device, by means of which a "hot spot" can be produced. This heating device can be of the type referred to in the preamble, where the metal disc is made of such a shape and/or design that the fuel is retained until it evaporates. The shape of the disc can also contribute to good distribution of the fuel mixture over the cylinders.

Known inlet manifolds of the above-mentioned type have the disadvantage that the metal disc (heat sink) is fixed to the inlet manifold itself and heat is lost through contact surfaces (see US-A-4,325,344) or the connections (for example, fixing ears) (see EP-B-0,157,952). The amount of heat loss can be as much as around 25%. This means that not only the thermistors, but also the generator and the battery have to be made relatively large.

The object of the invention is to eliminate this disadvantage and design and fit the heating device in such a way that considerably less heat is lost through the inlet manifold.

According to the invention, the above-mentioned metal disc (heat sink) is fixed in insulated fashion on or in the contact carrier, while said fixing means engage with the contact carrier, and not with the metal disc.

Of course, the metal disc is connected by means of a so-called earth contact to the inlet manifold or another part of the engine, but this contact is so thin that heat losses are negligible.

It is known to feed the heating device only when the engine is cold, for which purpose a temperature switch is used. It operates a relay to switch the electric current on or off. One advantage of the invention can be that the necessary current intensity is so small that the temperature switch switches the current on and off itself and the relay is not needed. Nor is it beyond the bounds of possibility for the heating device to be fed with electric current also when the engine is warm. In any case the heat sink can be made smaller through the use of the invention, so that the heat content is reduced and the response time is shortened.

It is possible to provide the contact carrier with a number of ears which are fixed to the inlet manifold by means of bolts. This fixing construction is relatively expensive (flattening off of the fixing parts, drilling holes and the like), and fitting the heating device takes quite a long time.

It is therefore preferable for the heating device to be pressed in clamping fashion towards a shoulder of the inlet manifold by spring means connected to the inlet manifold.

The fuel-air mixture must be prevented from escaping to the outside, and moisture must be prevented from reaching the space between heat sink and contact carrier. For that reason, sealing means will be disposed between inlet manifold and contact carrier, on the one hand, and between contact carrier and metal disc, on the other. In certain cases they can be the same sealing means.

The invention also relates to a heating device which is obviously intended for the inlet manifold according to the invention.

The invention will now be explained in greater detail with reference to the figures, in which three embodiments are shown in cross section.

Corresponding parts are indicated by the same reference numbers.

The figures show a part of an inlet manifold 1, in which an opening has been made. Fixed in this opening is a heating device 2 for fuel. This heating device has a so-called heat sink 3, in the form of a metal disc which faces the inside of the exhaust manifold. The disc can have side walls. The heat sink is fixed to a contact carrier 4 made of plastic. In Figs. 1 and 2, screw bolts 5 are used as the fixing means. In Fig. 3, lips 6 belonging to the heat sink are bent round rounded edges of the heat sink 3, and spacer blocks 7 are disposed between heat sink 3 and contact carrier 4.

Disposed on the heat sink are one or more tablets 8. The tablets are, for example, fixed with an adhesive which conducts both heat and electricity; a heat-conducting paste and a separate electricity conductor are also possible. These tablets form thermistors which are electrical resistors of PTC material, i.e. with a great positive temperature coefficient. Heat is generated by applying an electrical voltage over the PTC material. At a particular temperature the electrical resistance of the tablets will be so great that no further temperature increase occurs.

The contact carrier 4 forms a support for one or more contact springs 9, each of which engages with a tablet 8 and is connected to a connecting element 10 for an electricity supply cable 11.

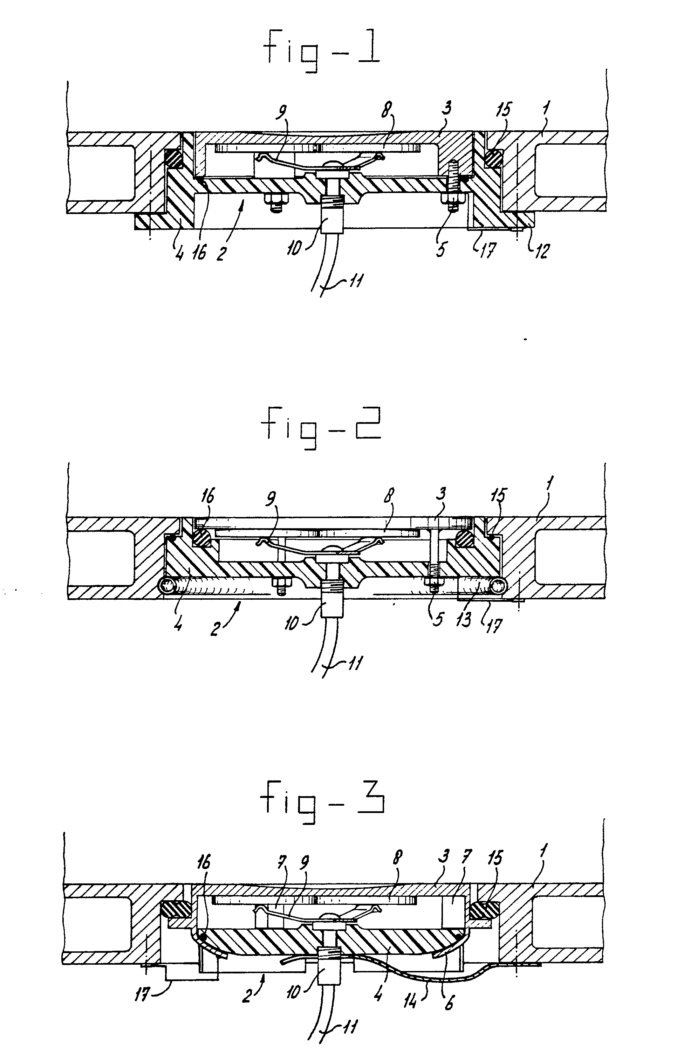

For fixing of the heating device 2, use is made of fixing means which form only the connection between inlet manifold 1 and contact carrier 4, and not between inlet manifold 1 and heat sink 3. In Fig. 1 the contact carrier is provided with a number of ears 12 which are fixed by means of bolts to the inlet manifold.

Fig. 2 shows a simple fastening, comprising an annular snap spring 13 which is disposed in a recess of the inlet manifold 1 and retains the device 2.

In the design shown in Fig. 3 a leaf spring 14 is used.

In all designs shown a sealing ring 15 is disposed between a shoulder of the inlet manifold and a flange or shoulder of the contact carrier.

A seal between contact carrier 4 and heat sink 3 is also important. It consists of a sealing ring 16.

Between the heat sink 3 and the inlet manifold 1 there will have to be an earth connection 17. It is so thin that the heat losses through the connection are negligible.

A temperature switch or a relay operated by a thermostat can be provided in the electric circuit, of which the cable 11 and the connection 17 form part. The thermostat is controlled by a temperature sensor which measures, for example, the temperature of the cooling water of the engine, and when a certain temperature is reached (e.g. 55 deg.C) the electric current to the PTC tablets is switched off. It is not beyond the bounds of possibility for the PTC tablets to be fed continuously with electric current while the engine is running, in which case the temperature switch is not needed, or it regulates the electric current intensity.

The face of the heat sink 3 facing the inside of the inlet manifold can be of such a shape or have such provisions that fuel is retained longer and/or the fuel flow is distributed better over the various cylinders. If these provisions are not disposed with radial symmetry, a means will be needed to give the heat sink the necessary orientation.

It is desirable for the invention that the heat sink 3 should be connected in well insulated fashion to the plastic contact carrier, which is in turn fixed to the inlet manifold. Heat losses are thereby kept to a minimum, so that the heat sink can have a lower heat content, the response time of the heat sink can be shortened, and the battery and/or generator can be made smaller. The embodiments according to Figs. 2 and 3 make fitting extremely simple.

## Claims

1 Inlet manifold for a combustion engine, provided with a heating device for the heating of fuel mixture, said heating device having a metal disc (heat sink) on which are fixed one or more thermistor tablets of material with a positive temperature coefficient (PTC), a contact carrier of plastic material with one or more contact springs which each engage with a PTC tablet and are connected to a connecting element for an electricity cable, with means being present for fixing the device in an opening of the inlet manifold, characterized in that the said metal disc (3) is fixed in insulated fashion on or in the contact carrier (4), while said fixing means (12; 13; 14) engage with the contact carrier (4), and not with the metal disc (3).

2. Inlet manifold according to Claim 1, characterized in that the heating device (2) is pressed towards a shoulder of the inlet manifold by spring means (13, 14) connected to the inlet manifold (1).

3. Inlet manifold according to Claim 1 or 2, characterized in that sealing means (15; 16) are disposed between the inlet manifold (1) and the contact carrier (4), on the one hand, and between the contact carrier (4) and the metal disc (3), on the other.

4. Heating device obviously intended for the inlet manifold according to one of Claims 1 to 3.

# fig-1

# fig-2

# fig-3

# EUROPEAN SEARCH REPORT

**European Patent Office**

Application number

EP 87 20 1067

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | US-A-4 325 344 (NIPPON SOKEN)<br>* Figure 4; column 4, lines 48-68; column 5, lines 1-18 * | 1 | F 02 M 31/12 |
| A | | 3 | |
| D,A | EP-A-1 579 452 (TEXAS INSTRUMENTS)<br>* Page 3, lines 16-33; page 4, lines 1-3; figures 1,2 * | 1 | |
| A | FR-A-2 256 621 (TEXAS INSTRUMENTS)<br>* Page 5, lines 26-38; page 6, lines 1-9 * | 2 | |
| A | US-A-4 313 413 (MIYOSHI) | | |
| A | US-A-4 483 304 (YOKOI) | | |

TECHNICAL FIELDS SEARCHED (Int. Cl.4)

F 02 M
H 05 B
F 02 N

The present search report has been drawn up for all claims

| Place of search | Date of completion of the search | Examiner |
|---|---|---|
| THE HAGUE | 02-09-1987 | JORIS J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82